## Europäisches Patentamt

## European Patent Office

## Office européen des brevets

(19)

(11) Veröffentlichungsnummer: **0 012 212**
**A2**

(12) **EUROPÄISCHE PATENTANMELDUNG**

(21) Anmeldenummer: **79104292.2**

(22) Anmeldetag: **03.11.79**

(51) Int. Cl.³: **G 10 H 1/00,** A 63 H 1/28,
G 06 K 7/06

(30) Priorität: **04.11.78 ES 474814**

(43) Veröffentlichungstag der Anmeldung: **25.06.80**
**Patentblatt 80/13**

(84) Benannte Vertragsstaaten: **AT BE CH DE FR GB IT LU NL SE**

(71) Anmelder: **Firma geobra Brandstätter GmbH. & Co. KG, Fürther Strasse 33, D-8502 Zirndorf (DE)**

(72) Erfinder: **Galotta, E. J., Avenida America 24 (7-B), Madrid 2 (ES)**

(74) Vertreter: **Eitel, Alfred, Dr. et al, Patentanwälte Dipl.-Ing. Dr. Alfred Eitel Dipl.-Ing. Dipl.-Ldw. Ernst Czowalla Dipl.-Phys. Peter Matschkur Königstrasse 1, D-8500 Nürnberg (DE)**

(54) **Mittels perforierter Folien programmierbares Musikgerät.**

(57) Die Erfindung bezieht sich auf ein Musikspielzeug mit einer Mehrzahl von Stromkreisen, die beim Schließen des Stromkreises verschiedene Töne erzeugen. Die Mehrzahl der Stromkreise entspricht einem Tonbereich von wenigstens einer Tonleiter. Die Leiter der Stromkreise werden durch eine Folie oder eine Schablone abgesetzt, die den einzelnen Tönen entsprechende Öffnungen über den verschiedenen Leitern aufweist. Wird ein Stromkreis durch eine solche Öffnung hindurch geschlossen, z. B. durch Druck auf die der Schablone aufliegende leitende Folie, einen Stift o. dgl. wird der jeweilige Ton erzeugt. Die Anzahl der verwendeten Stromkreise bestimmt den verfügbaren Umfang an Tönen bzw. Noten.

0012212

**Dr. Max Schneider** † (1977)
**Dr. Alfred Eitel** Dipl.-Ing.
**Ernst Czowalla** Dipl.-Ing. Dipl.-Ldw.
**Patentanwälte** **Peter Matschkur** Dipl.-Phys.

Zugelassen beim Europäischen Patentamt - admitted to the European Patent Office - agréés près l'Office européen des brevets

85 Nürnberg 106, den  2. Nov. 1979
Königstraße 1 (Museumsbrücke)
Fernsprech-Sammel-Nr. 20 39 31

**P** Parkhaus Katharinenhof
Parkhaus Adlerstraße

diess.Zch.: 29 970/26-R1.

Firma geobra Brandstätter GmbH. & Co. KG., Fürther Straße 33,
8502 Zirndorf

## Mittels perforierter Folien programmierbares Musikgerät

Dieses Erfindungspatent bezieht sich auf eine mit perforierten Blättern programmierbare musikalische Vorrichtung, die so ausgelegt ist, daß sich beim sukzessiven Vorbeilauf an einem Kontaktelement verschiedene Stromkreise schließen, welche wiederum integrierte Schaltkreise aktivieren, die mit großer Präzision auf Frequenzen abgestimmt sind, die reinen Noten oder Halbtönen entsprechen; durch diese aufeinanderfolgenden Kontakte entstehen mit ausreichender Genauigkeit Töne, die denen eines bekannten Volksliedes oder Kinderliedes entsprechen. Die Genauigkeit der Töne muß um so präziser sein, je größer die Anzahl der verwendeten Frequenzen und dementsprechend der unabhängigen Stromkreise ist. Diese Vorrichtung ist sehr nützlich, um den Kindern die musikalischen Begriffe und die dazugehörigen Klänge simultan beizubringen. Sie stellt eine sehr erfolgreiche Übung zur Entwicklung von Reflexen dar, denn sie zwingt die genaue Position anzugeben und jede Note während des geforderten Zeitintervalles zu halten. Gleichzeitig orientiert ihre Anwendung über die Stellung der einzelnen Noten in Bezug auf die Klangskala. Die Nützlichkeit der Vorrichtung ist groß, denn die Anwendung erfordert keinerlei musikalische Kenntnisse oder besondere Ta-

Deutsche Bank A. G. Nürnberg Nr. 330 688, BLZ 760 700 12  -  Hypobank Nürnberg Nr. 1 560 274 501, BLZ 760 202 14
Postscheck-Konto: Amt Nürnberg Nr. 383 05-855 - Drahtanschrift: Norispatent

-2-

lente, und trotzdem kann eine unbegrenzte Anzahl von Liedern der gleichen Taktstruktur interpretiert werden.

Um dies zu erreichen, werden die 20 bis 27 Stromkreise in Reihen und in mehrere Streifen - üblicherweise sind es vier - auf einer Schablone, die durch die Trägertafel einer Platine gebildet wird, angeordnet, so daß bei Auflage einer perforierten Platte oder eines perforierten Blattes mit horizontal verstreuten Perforierungen an den erforderlichen Punkten und durch sukzessives Streichen des Kontaktgebers über diese Öffnungen, die den Kontakt zum Stromkreis freilassen, Note für Note des gewünschten Klanges, und so schlußendlich die Melodie des Liedes, erzielt wird. Das Bestreichen erfolgt von links nach rechts und von den obersten zu den untersten Streifen.

Hierzu schließt der Kontaktgeber einen bestimmten Stromkreis und stellt den Kontakt zwischen einem der Leitdrähte oder -kabel und Masse her, denn jeder dieser Dräte ist so angeschlossen, daß er den Stromkreis eines anderen integrierten Schaltkreises, der auf eine andere Frequenz abgestimmt ist, schließt.

Bei einer anderen Ausführung wird Masse ersetzt durch eine weitere Ansammlung von Drähten, die zu den vorgenannten parallel angeordnet sind und zwischen diesen ordnungsgemäß getrennt und abisoliert liegen. Das Ende dieser Drahtansammlung wird an Masse geschlossen. Der Stromkreis schließt sich, wenn mittels Kontaktgeber zwischen den Drähten beider Ansammlungen Kontakt entsteht.

Offensichtlich wird diese Erfindung nicht nur jenen konkreten Ausführungen mit fundamental-elektronischen Bauelementen zugeschrieben, die eine Ansammlung von einwandfrei abgestimmten integrierten Schaltkreisen beinhalten, denn diese Drähte können auch angewandt werden, um statt den Stromkreis, der einen integrierten Schaltkreis erregt, zu schließen, den Kontakt eines Relais zu schließen, das wiederum den freien Durchzug von Druckluft zur Aktivierung einer auf die gewünschte Frequenz gestimmten Orgelflöte öffnet, oder um den elektromagnetischen Stromkreis zu schließen, der auf ein Hämmerchen wirkt, das ein Glöckchen schlägt, oder für alle denkbar möglichen durchführbaren Kombinationen zur Erzielung einer reinen, ausreichend umfassenden und definierten Tonskala. Der Kontakt zwischen jedem Draht der verschiedenen Stromkreise und Masse wird hergestellt im Prinzip durch ein Reibelement, bestehend aus einer elektrischen Kontaktbürste, die gleichzeitig auf einem der Drähte und Masse anliegt. Zu diesem Zweck sind alle diese Drähte auf einer Leiterplatine befestigt, wobei jeder einzelne von ihnen einwandfrei von dieser Platine abisoliert ist. Dazu ist sie auf der ganzen Fläche abgedeckt mit Ausnahme des oberen Teiles, über den die Kontakte hergestellt werden müssen. Dadurch wird die Isolierung zwischen jedem Draht und Masse immer dann gewährleistet, wenn das Reibelement nicht aufliegt. Statt Masse an die Kontaktplatte unter denDrähten anzuschließen, erscheint es manchmal sinnvoller, sie an das Ende einer Kontaktnadel anzulegen, deren Kugelspitze einen der Stromkreise schließt. Bei dieser Ausführungsart wird mit einer sehr sicheren Methode die Unabhängigkeit eines zu jedemStromkreis gehörenden Drahtes von dem der Masse gewährleistet.

Außerdem besteht die Möglichkeit, statt Platten mit Perforierungen an vorbestimmten Punkten für die vorgesehene Melodie andere Platten mit nicht unterbrochener Fläche zu verwenden, die allerdings an den vorbestimmten Zonen auf der Vorder- und Rückseite der Platte mit leitfähigem Material versehen sind, wodurch diese Zonen im Kontakt mit dem für eine bestimmte Note, die bei ihrer Berührung über die Kontaktnadel aktiviert wird, vorhandenen Kabel stehen.

Wir werden die Eigenschaften der programmierbaren musikalischen Vorrichtung mit perforierten Blättern konkretisieren, die wir unter Bezugnahme auf beigefügte Zeichnungen zum Patent anmelden und weisen darauf hin, daß diese ausschließlich an bestimmte Ausführungsarten gebunden sind, die aufgrund von Ausführungsbeispielen mit dem angegebenen Ziel vorkommen,denn es ist selbstverständlich, daß der Gestaltungsentwurf, die Abmessungen und die zu verwendenden Materialien, aus denen diese programmierbare musikalische Vorrichtung hergestellt wird, und ebenso die für die Reihenfolge der verschiedenen Noten und die Ausführung der programmierten Platten mit den verschiedenen Melodien angewandten Methoden in jedem Einzelfall für eine ganz be-

- 4 -

stimmte Anwendung ausgelegt werden, ohne daß solche Alternativen und auch jene in Bezug auf Einzelheiten der Gestaltung oder des Aufbaues die zum Patent angemeldete Besonderheit berühren. Dadurch sind die Musikalischen Vorrichtungen, die hergestellt werden, um Übereinstimmung mit der aufgezeichneten Gesamtidee und alle möglichen Modifizierungen nichts anderes als Varianten, die ebenfalls in diesem vorliegenden Patent enthalten und entsprechend geschützt sind.

Die Erfindung bezieht sich auf ein Musikspielzeug oder -gerät mit Folien und darin derart angeordneten Öffnungen (z.B. Schablonen), so daß beim Niederdrücken eines metallischen Kontaktes auf einzelne der aufeinanderfolgenden Öffnungen einzelne Stromkreise geschlossen werden, welche die der Melodie eines Liedes entsprechenden Musiknoten bzw. Töne erzeugen. Das Schliessen jedes einzelnen Stromkreises erzeugt den Ton einer bestimmten Musiknote. Daher ist der volle Umfang der Musiknoten von der Anzahl der verwendeten Stromkreise abhängig.

Jedes einzelne Wort oder Silbe der Verse des Liedes ist an der Öffnung der Schablone aufgedruckt, welche die diesem Wort entsprechende richtige Musiknote hervorruft. Auf diese Weise lernt das mit dem Musikspielzeug spielende Kind gleichzeitig die Wörter und die dazugehörenden Musiknoten, während es auf die einzelne Öffnung drückt, die automatisch die richtige Musiknote bzw. deren Ton hervorruft.

Dieses Spielzeug stellt auch eine wirkungsvolle Übung zur Entwicklung der Reflexe und Geschicklichkeit dar, indem die Kontrolle der Handbewegung erlernt wird, während der das Kind auf die Stelle der einzelnen aufeinanderfolgenden Öffnungen greift und jede Note während der richtigen Zeitdauer festhält. Indem diese Geschicklichkeit zur Entwicklung kommt, wird das Kind auch mit den ansteigenden oder abfallenden Tonstufen vertraut. Außerdem ist dieses Spielzeug besonders für Personen ohne Musikkenntnisse oder Talent geeignet.

Die Zeichnung 1 stellt die Vorderseite einer verdrahteten Platine dar.

- 5 -

Die Zeichnung 2 zeigt die Rückseite der Platine, wie Zeichnung 1; dabei kann die Verschaltung der Kabel der Vorderseite beachtet werden.

Die Zeichnung 3 zeigt ein perforiertes Blatt/Platte mit einer bestimmten Melodie.

Die Zeichnung 4 stellt ein Reibelement dar.

Die Zeichnung 5 zeigt eine Kontaktnadel, die mit Masse verbunden wird.

Die Zeichnung 6 stellt schematisch das elektrische Schema der Erfindung dar unter Verwendung integrierter Schaltkreise und eines elektromagnetischen Lautsprechers, und, zum Schluß zeigt

die Zeichnung 7 das elektrische Schema der Vorrichtung für die Erregung verschiedener Relais, die den Stromkreis eines Klangelementes aktivieren oder die Zuleitung zu einer Klangflöte öffnen.

In Bezug auf diese Zeichnungen und die auf ihnen notierten Positionen, die unterschiedliche Teile und Einzelheiten der programmierbaren musikalischen Vorrichtung kennzeichnen und die zur Erläuterung dieser Niederschrift von Interesse sind, ist die Beschreibung dieser Vorrichtung wie folgt:

In Zeichnung 1 sind vier verschiedene Streifen, Position 26, 27, 28 und 29, zu sehen, von denen jeder aus 20 verschiedenen Kabeln, numeriert von 2 bis 21, besteht, die von einem freien Ende ausgehen, Position 30 (Zeichnung 2) und sich mit dem Bündel des Streifens Pos. 26 fortsetzen, weitergeführt werden mit Bündel Pos. 31 (Zeichnung 2) zu den Drähten von Bündel 27 der Zeichnung 1 und diese wiederum durch den Bündel Pos. 32 zu den Drähten der Pos. 28 der Zeichnung 1, die ihrerseits durch den Bündel Pos. 33 mit den Drähten Pos. 29 verbunden werden, um alle mittels Pos. 34 eingeleitet zu werden in jeden der integrierten Schaltkreise oder unabhängigen Relais.

- 6 -

In Zeichnung 6 wird gezeigt, wie jedes einzelne der Kabel Pos. 2 bis 21 das Ende eines Stromkreises darstellt, der einen der integrierten Schaltkreise $V_1$ bis $V_{20}$ erregt bzw. wie alle diese intergrierten Schaltkreise in Reihe mit einem Lautsprecher Pos. 23 geschaltet sind, der den Klang entsprechend der Frequenz dieses integrierten Schaltkreises erzeugt, sobald der Hauptschalter Pos. 24 geschlossen wird und das Ende des einem bestimmten integrierten Schaltkreis entsprechenden Kabels in Kontakt mit Masse gebracht wird, wodurch der nötige Strom zur Stromquelle Pos. 25 fließen kann.

Alle diese intergrierten Schaltkreise sind parallel geschaltet und an eine Klemme des Hauptschalters Pos. 24 angeschlossen, denn es ist vorgesehen, daß sie sich erregen, wenn der Kontakt mit Masse hergestellt wird. Wie bereits ausgeführt, kann dieser Kontakt einerseits hergestellt werden bei Auflage der Kabel der Streifen Pos. 26, 27, 28 und 29 der Zeichnung 1, z.B. auf einer Leiterplatine Zeichnung 1 mit dem Reibelement geeigneter Ausführung Pos. 38, wie in Zeichnung 4 dargestellt, das beim Bestreichen einer der Öffnungen Pos. 36 (Zeichnung 3), die in dem Blatt oder der Platte Pos. 35 dieser Zeichnung eingestanzt sind, den Kontakt zwischen einem bestimmten Draht und Masse herstellt. Andererseits kann dieser Kontakt auch hergestellt werden mit einer an Masse, Pos. 1, angeschlossenen Kontaktnadel Pos. 39 über die Perforierungen Pos. 36 oder eventuell auch über jene bereits erwähnten mit energieleitendem Material versehenen Zonen, und zwar durch Berührung einer davon, wodurch der Stromkreis zwischen dem entsprechenden Draht und Masse über die Kontaktnadel und der leitenden Stelle auf der Vorder- und Rückseite der vorprogrammierten Platte Pos. 35 (Zeichnung 3) geschlossen wird. Selbstverständlich ist es, daß statt des Stromkreises der Zeichnung 6 ein anderer Stromkreis ausgelegt werden kann, der mit einem Satz Relais $R_1$ bis $R_{20}$ (Zeichnung 7) geschlossen wird, wobei mit jedem einzelnen von ihnen entweder der freie Durchstrom von Druckluft oder der Schlag eines Hammers aktiviert werden kann. In diesem Falle sind die Stromkreise voneinander unabhängig im Gegensatz zu dem Beispiel mit dem Lautsprecher Pos. 23.

In Übereinstimmung mit den vorstehenden Ausführungen ist die Funktion dieser Vorrichtung sehr einfach zu erklären:

Hat man einen Satz von links nach rechts und von oben nach unten sukzessiv perforierter Blätter (Pos. 35, Zeichnung 3), die eine oder mehrere Melodien enthalten, so wird eines dieser Blätter auf die Tafel Pos. 22 (Zeichnung 1) gelegt. Dieses Blatt Pos. 35 (Zeichnung 3) enthält eine Ansammlung von Perforierungen Pos. 36, die den Noten einer Melodie entsprechen und aufgedruckt die Eintragu-ngen Pos. 37, die ihrerseits deren Textteil (Selbstlaut oder Silbe des Liedes) entsprechen. So aufgelegt kommen die Perforierungen über eines der Kabel Pos. 2 bis 21 zu liegen und in der praktischen Ausführung liegen sie mit ausreichendem Abstand voneinander und werden berührt entweder mit der Kontaktnadel Pos. 39 (Zeichnung 5) oder mit dem Reibelement Pos.38 (Zeichnung 4). Die Kontaktnadel oder das Reibelement werden nacheinander auf die verschiedenen Perforierungen gelegt, wodurch der einer jeden Perforierung entsprechende Klang erzeugt und die durch die Gesamtheit der Perforierungen entstehende Melodie gebildet wird. Bei 23 verschiedenen Klängen, Tönen und Halbtönen, was ungefähr 2 chromatischen Tonleitern entspricht,erreicht man eine ausreichende Bandbreite für die Mehrheit der Volks- und Kinderlieder. Wird die Anzahl auf 26 erhöht, so erreicht man eine höhere Perfektion, das Produkt verteuert sich jedoch; es ist also ein Kompromiß zwischen der geforderten Qualität und den Kosten der Vorrichtung zu finden.

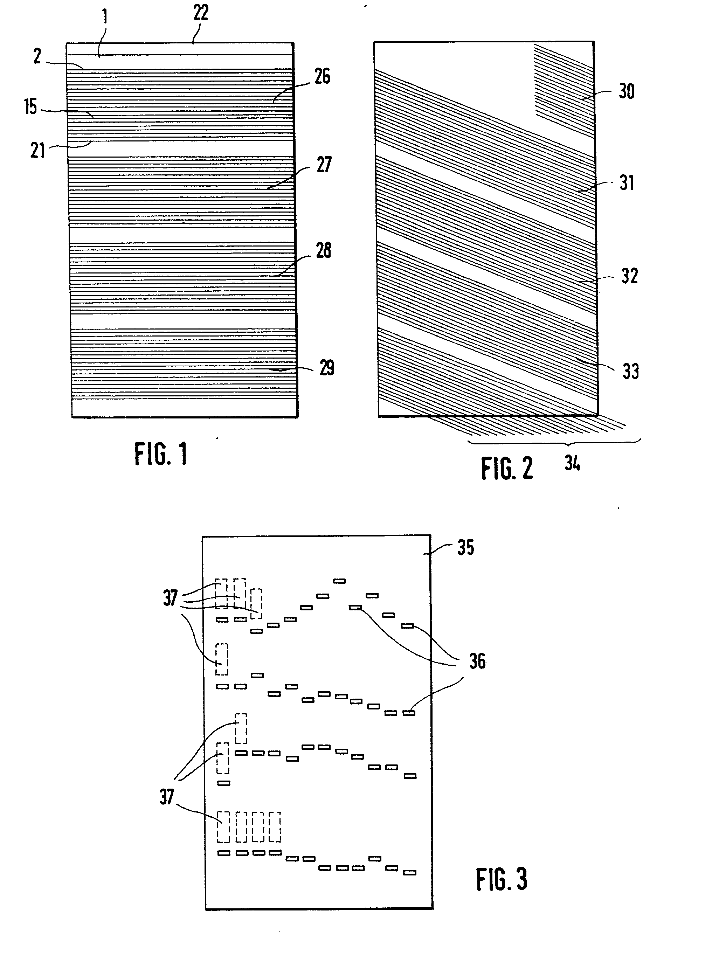

Die Erfindung beinhaltet einesteils etwa 26 einzelne Stromkreise (die beiliegende Zeicnung, Fig. 1, zeigt beispielsweise nur 20 Stromkreise). 26 Stromkreise ergeben allerdings einen Bereich von zwei chromatischen Tonleitern, was eine benahe unbegrenzte Anzahl von Liedern ermöglicht.

Die Stromkreise sind auf einer Platte 1 offenliegend angeordnet oder aufgebracht, wobei die gewünschte Anzahl von Stromkreisen in Form von waagrecht verlaufenden Drähten oder streifenförmigen Leitern vorliegt. Das Format der Vorderseite der Platte 1 ist derart gestaltet, daß die 20 waagrechten Drähte oder Leiter am oberen Ende von links nach rechts (wie in Fig. 1 dargestellt) verlaufen und fortlaufend um die Rückseite der Platte herumgeführt ( Fig. 2) sind. Dieselben 20 Drähte erscheinen dann erneut auf der Vorderseite der Platte (Fig. 1, Nr. 22). Dieser Vorgang wiederholt sich,so daß schließlich vier Gruppen von Drähten auf der Vorderseite der Platte gebildet werden, wie in Fig. 1 mit Nr. 26, 27, 28 und 29 dargestellt ist.

-8-

Fig. 2, Nr. 30, zeigt, daß die 20 Drähte anfänglich von derRückseite der Platte 1 ausgehen.

Jeder der 20 Drähte stellt eine Musiknote dar und jeder Draht erstreckt sich fottlaufend von 26 aus um die Rückseite der Platte 31 herum wieder zur Vorderseite der Platte bei 27 zurück usw., bis nach 28 und 29 auf der Vorderseite der Platte.

Deshalb erscheint jeder eine bestimmte Musiknote darstellende Draht oder Leiter bei jedem der in Fig. 1 mit 26, 27, 28 und 29 numerierten Abschnitte innerhalb der Gruppe von 20 Drähten in derselben relativen Lage. Beispielsweise erscheint der in Fig. 1 mit der Nr. 2 bezeichnete oberste Draht ebenfalls als der oberste Draht in der Gruppe von 20 Drähten, die in Fig.1 unter der Nummer 27, 28 und 29 bezeichnet ist.

Die Anordnung der 20 Drähte oder Noten, die sich innerhalb jeder der vier Abschnitte auf der Vorderseite der Platte 1 wiederholt, dient praktischen Zwecken, da sie an den üblichen vierzeiligen Kehrreim eines Wiegenliedes oder anderen Liedes angepaßt ist. Die Anzahl der Abschnitte kann verschieden gewählt werden, um kürzere oder längere Zeilen von Versen oder Kehrreimen zu ermöglichen.

Die Musikfolien oder Schablonen mit ihren Öffnungen sind derart beschaffen, daß jede Öffnung über dem bestimmten Draht oder Drähten auf der Platte 1 zu liegen kommt, welcher die gewünschte Musiknote hervorruft, sobald ein elektrischer Kontakt mittels eines Leiters hergestellt wird, welcher den oder die Drähte berührt, die durch die Öffnung offengelegt sind.

Jeder einzelne Ton wird dadurch hervorgerufen, daß man mit einem im Stromkreis liegenden Leiter in die Öffnung drückt, um den Stromkreis zu schliessen. Jedes Lied wird dadurch wiedergegeben, daß man in waagrechter Folge auf die Öffnungen von links nach rechts längs jedem der vier Abschnitte drückt, wobei man beim Abschnitt 26 beginnt und nach unten zu den Abschnitten 27, 28 und 29 fortsetzt.

- 9 -

Das Schließen der Stromkreise zur Erzeugung von Musiknoten kann auf vielfältige Art erreicht werden. Vier solcher Arten ergeben sich wie folgt:

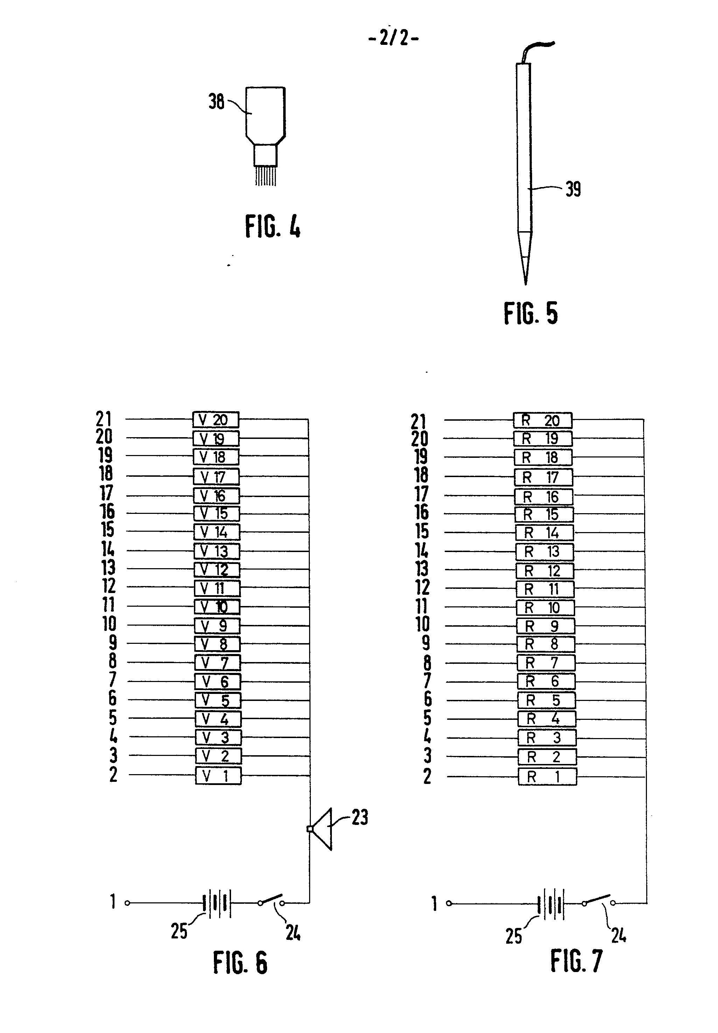

Methode 1: Die Vorderseite der Platte ist mit einer leitenden Metallfolie abgedeckt, die als Erde dient, und die Drähte sind auf der Platte, wie in Fig. 1 dargestellt, derart angeordnet, daß die Drähte überall dort isoliert sind, wo eine Berührung mit dem durch die Metallfolie gebildeten Untergrund besteht. Dagegen liegt der metallische Draht an der Oberfläche frei. Wenn daher ein metallischer Kontakt, wie etwa eine in Fig. 4, Nr. 38, dargestellte Bürste, auf eine Öffnung der Musikfolie gedrückt wird, bewirken die Metallborsten eine Kontaktgabe sowohl mit dem durch de Metallfolie gebildeten Untergrund als auch dem freiliegenden Metall des Leiters, wodurch der Stromkreis geschlossen und die gewünschte Musiknote hervorgerufen wird.

Methode 2: Unter Verwendung eines metallischen Zeigers, der, wie in Fig. 5 dargestellt, mit Erde verbunden ist, wird durch die Öffnung hindurch ein Kontakt mit dem freiliegenden Leiter auf der Platte hergestellt, wodurch der Stromkreis geschlossen und der gewünschte Ton einer Musiknote hervorgerufen wird. In diesem Fall weist die Platte im Unterschied zur Methode 1 keinen durch eine Metallfolie gebildeten Untergrund auf, da der metallische Zeiger (Fig. 5) an Stelle des durch die Metallfolie gebildeten Untergrundes als Erde dient.

Methode 3: Anstatt mit 20 einzelnen Drähten, kann die Platte auch mit 20 Sätzen von je zwei benachbarten Drähten versehen sein, wobei ein Draht des aus zwei Leitern bestehenden Satzes als Erde dient. Durch Berührung der beiden blanken Leiter z.B. mit einer Metallbürste wird ein Kontakt durch die Öffnung hindurch hergestellt, und der den gewünschten Musikton hervorrufende Stromkreis wird geschlossen.

Methode 4: Eine weitere wahlweise Methode zur Herstellung des Kontaktes mit den Drähten auf der Platte besteht darin, ein Blatt Metallfolie über die gesamte perforierte Musikfolie zu legen. Die Metallfolie dient sodann als Erde, so daß beim Anlegen eines Druckes an irgendeiner Stelle, an der in der Musikfolie unterhalb der Metallfolie eine Öffnung vorhanden ist, sich

- 10 -

der eine Kontaktgabe mit dem Draht an dieser Öffnung erfahrende Stromkreis schließt und die gewünschte Musiknote hervorgerufen wird.

Diese Methode hat den Vorteil, daß das entsprechende Wort des Liedes unmittelbar über dieser Öffnung auf die Metallfolie oder auf ein auf die Metallfolie aufgelegtes Blatt aufgedruckt werden kann und das Kind lediglich auf das gedruckte Wort drückt, um die dem Vers entsprechende Musiknote hervorzurufen. Außerdem hat diese Methode den Vorteil, daß keinerlei Zeiger oder Bürsten zur Kontaktgabe benötigt werden, da der Kontakt ausschließlich durch Fingerdruck herbeigeführt wird.

- 1 -

<u>Patentansprüche :</u>

1. Mit gelochten Blättern programmierbare musikalische Vorrichtung, charakterisiert, denn sie besteht aus der Trägertafel einer Leiterplatine, die mehrere Streifen enthält, von denen jeder durch 20 bis 26 Drähte gebildet wird und die miteinander in Reihe verbunden sind, und zwar ein jeder Draht eines Streifens mit dem in gleicher Position genden des letzten Streifens, wobei die Streifen einer unter dem anderen auf der Platine angeordnet sind und der Anschluß auf der Rückseite der Platine hergestellt wird; die Enden dieser Drähte sind an den Pol einer Gleichstromquelle angeschlossen, während jedes einzelne der entgegengesetzten Enden an einen für jeden Draht unterschiedlichen integrierten Schaltkreis angeschlossen ist, der jeweils eine genau abgestimmte Frequenz erzeugt, so daß die jedem Draht entsprechende Frequenz eine reine Note oder ein Halbton ist und die aller Drähte unterschiedliche Klänge in Tonleiterfolge ergibt; der Auslauf eines jeden Drahtes wird an einen Lautsprecher angeschlossen, in dem genau der bestimmte Ton erzeugt wird entsprechend der Frequenz des integrierten Schaltkreises, dessen Stromkreis sich schließt, indem Kontakt zwischen einem Terminal, das an den anderen Pol der Gleichstromquelle angeschlossen ist, und irgendeinem der aufgeführten Drähte hergestellt wird; um die eine musikalische Komposition ergebenden verschiedenen Klänge zu erzeugen, wird eine perforierte Schablone mit einer an geeigneten Stellen angebrachten Ansammlung von Durchlässen oder Perforierungen zur Erzielung der aufeinanderfolgenden Noten auf die vorerwähnte Platine aufgelegt und beim Herstellen des Kontaktes mit einem Reibelement in den aufeinanderfolgenden Öffnungen zwischen einem der Drähte des Streifens und der Leiterplatine, die gegen Masse geschlossen ist, welche wiederum unter den Drähten und von diesen entsprechend abisoliert liegt, eine gut abgestimmte Musiknote erzeugt.

2. Musikalische Vorrichtung wie Patentanspruch 1, charakterisiert, denn der Anschluß gegen Masse wird realisiert durch einen weiteren Satz Drähte, die parallel zwischen dem vorgenannten Satz Drähte eingelegt, ordnungsgemäß getrennt und isoliert sind und das Ende dieses Drahtsatzes gegen Masse geschlossen ist.

3. Vorrichtung wie vorstehende Patentansprüche, charakterisiert, denn die elektronischen auf genau festgelegte Frequenzen abgestimmten integrierten Schaltkreise und der Lautsprecher werden eventuell durch auf die gewünschten Frequenzen gestimmte Tonpfeifen oder sonstige Lufttonelemente ersetzt, in welche die Luft eines Verdichters eingeblasen wird, wenn einer der Stromkreise, wie vorerwähnt, geschlossen wird.

4. Vorrichtung wie Patentansprüche 1 und 2, charakterisiert, denn die elektronischen integrierten Schaltkreise und der Lautsprecher werden durch einen Satz Glöckchen ersetzt, die in den gewünschten Frequenzen schwingen und gegen die ein Hammer schlägt, sobald sich dessen Stromkreis bei Erregung des entsprechenden Relais schließt.

5. Vorrichtung wie Patentanspruch 1, charakterisiert, denn statt einer gegen die Masse geschlossenen Leiterplatte und eines Reibelementes wird Masse gegen das Ende einer Kontaktnadel mit Kugelspitze geschlossen, mit der aufeinanderfolgend Kontakt gegen den einer jeden aufeinanderfolgenden Öffnung entsprechenden Draht hergestellt wird.

6. Vorrichtung wie Patentanspruch 1, charakterisiert, denn eine musikalische Komposition wird wiedergegeben auf einer oder mehreren Schablonen, in die in geeigneter Höhe und unter Beachtung geeigneter Abstände die entsprechenden Öffnungen eingestanzt wurde, wobei auf der Vorderseite der Textteil des Liedes eingetragen ist, der dieser Note entspricht.

7. Vorrichtung wie vorstehende Patentansprüche, charakterisiert, denn die Schablonen mit eingestanzten Öffnungen werden eventuell ersetzt durch andere ohne Öffnungen, die jedoch in den bestimmten Abständen Zonen aufweisen, die Elektrizität leiten.

8. Mit gelochten Blättern programmierbare musikalische Vorrichtung, wie beschrieben und in dieser Beschreibungsniederschrift zum Patent angemeldet.

FIG. 1

FIG. 2

FIG. 3

FIG. 4

FIG. 5

FIG. 6

FIG. 7